# EUROPEAN PATENT SPECIFICATION

(11) **EP 4 197 897 B1**
(45) Date of publication and mention of the grant of the patent: **21.10.2026**
(21) Application number: 22202987.8
(22) Date of filing: 21.10.2022
(51) Int. Cl.: B63B 49/00, B62D 1/04, B63H 20/08, B63H 25/02

(54) **MARINE VESSEL STEERING MECHANISM, MARINE VESSEL STEERING SYSTEM, AND MARINE VESSEL**
WASSERFAHRZEUGLENKMECHANISMUS, WASSERFAHRZEUGLENKSYSTEM UND WASSERFAHRZEUG
MÉCANISME DE DIRECTION DE NAVIRE, SYSTÈME DE DIRECTION DE NAVIRE ET NAVIRE

(30) Priority: 16.12.2021 JP 2021204458
(43) Date of publication of application: 21.06.2023
(73) Proprietor: Yamaha Hatsudoki Kabushiki Kaisha, Iwata-shi, Shizuoka 438-8501 (JP)
(72) Inventor: Watanabe, Yoshikazu, Iwata-shi, Shizuoka, 438-8501 (JP)
(74) Representative: Grünecker Patent- und Rechtsanwälte PartG mbB

(56) References cited:
- EP-A1- 3 693 265
- US-A1- 2019 071 112
- US-A1- 2019 291 769
- US-B1- 7 278 367

## Description

The present invention relates to a steering mechanism for a marine vessel according to the preamble of independent claim 1, a marine vessel steering system, and a marine vessel. Such a steering mechanism for a marine vessel can be taken from the prior art document US2019291769A1 or US 2019/071112 A1.

In conventional marine vessels, switches are connected to respective pieces of nautical equipment, such as a horn and a lighting fixture, one-to-one by wiring. On the other hand, for the purpose of sharing data among pieces of nautical equipment and facilitating the configuration of a marine vessel steering system, recent marine vessels employ a CAN (Controller Area Network), on which nodes corresponding to switches and respective pieces of nautical equipment are connected to each other via a common bus. In such marine vessels, switches are gathered into a switch panel or displayed on a display having a touch panel function, and the switch panel or the display is typically placed on a console panel in a vessel cockpit (see, for example, "2022 CZone Catalog", pages 60-61, ON BOARD MARINE GROUP LTD, Internet URL: https://www.delzer.com/oneasg/czn_cat_003/) together with a remote control switch and a joystick. A steering wheel is also placed in the vessel cockpit.

Such an arrangement results in a lack of space in the console panel of the vessel cockpit, making it difficult to place other switches or equipment on the console panel. Therefore, there is room for improvement in terms of flexibility of switch layout.

Furthermore, a vessel operator holds a steering wheel during normal navigation, while the steering wheel is located away from the console panel of the vessel cockpit. As a result, the vessel operator needs to reach out to operate the switches in the switch panel located on the console panel of the vessel cockpit during the navigation and, in some cases, needs to lean his/her body toward the console panel of the vessel cockpit. Therefore, there is room for improvement also in terms of switch operability.

It is the object of the present invention provide a marine vessel steering mechanism, a marine vessel steering system, and a marine vessel that improve flexibility of switch layout and further improve switch operability.

According to the present invention said object is solved by a marine vessel steering mechanism having the features of independent claim 1, and is solved by a marine vessel steering system having such marine vessel steering mechanism and/or by a marine vessel having such marine vessel steering system. Preferred embodiments are laid down in the dependent claims.

According to a preferred embodiment, a marine vessel includes a hull and a steering system. The steering system includes at least one piece of nautical equipment, a steering mechanism that adjusts a traveling direction of the hull, and an input terminal that receives an input of from a user. The steering mechanism includes a steering wheel with an operation switch for operating the at least one piece of nautical equipment. The input terminal allows the user to associate the at least one piece of nautical equipment and with the operation switch.

According to another preferred embodiment, a steering system for a marine vessel includes at least one piece of nautical equipment, a steering mechanism that adjusts a traveling direction of a hull of the marine vessel, and an input terminal that receives an input from a user. The steering mechanism includes a steering wheel with an operation switch for operating the at least one piece of nautical equipment. The input terminal allows the user to associate the at least one piece of nautical equipment with the operation switch.

According to another preferred embodiment, a steering mechanism is provided for a marine vessel equipped with at least one piece of nautical equipment. The steering mechanism includes a steering wheel with an operation switch for operating the at least one piece of nautical equipment. The operation switch is configured to be associated with the at least one piece of nautical equipment through an input terminal that receives an input from a user.

According to the above configurations, the steering wheel of the steering mechanism is provided with at least one operation switch for operating nautical equipment, which eliminates the need to place operation switches for operating nautical equipment on a console panel of a vessel cockpit. This makes it easier to place other switches on the console panel of the vessel cockpit, thereby improving flexibility of switch layout on the console panel of the vessel cockpit. Further, a vessel operator is allowed to easily operate, without taking off the hand from the steering wheel, the operation switch for operating nautical equipment, which eliminates the need to reach out to operate the nautical equipment and improves also the operability of the operation switch for operating nautical equipment.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a marine vessel including a marine vessel steering mechanism according to a preferred embodiment.
FIG. 2 is a perspective view of a main part of a vessel cockpit according to the embodiment.
FIG. 3 is a diagram for explaining a configuration of a marine vessel steering mechanism.
FIG. 4 is a block diagram for schematically explaining a configuration of a marine vessel steering system.
FIG. 5 is a block diagram schematically explaining a configuration of a variation of the marine vessel steering system.

### DETAILED DESCRIPTION OF THE PREFERRED EMBODIMENTS

Hereinafter, preferred embodiments will be described with reference to the drawings.

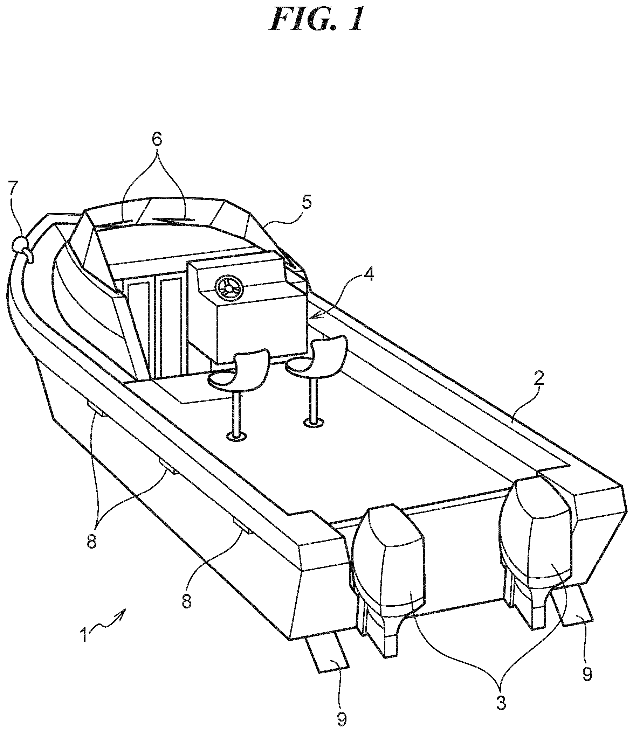

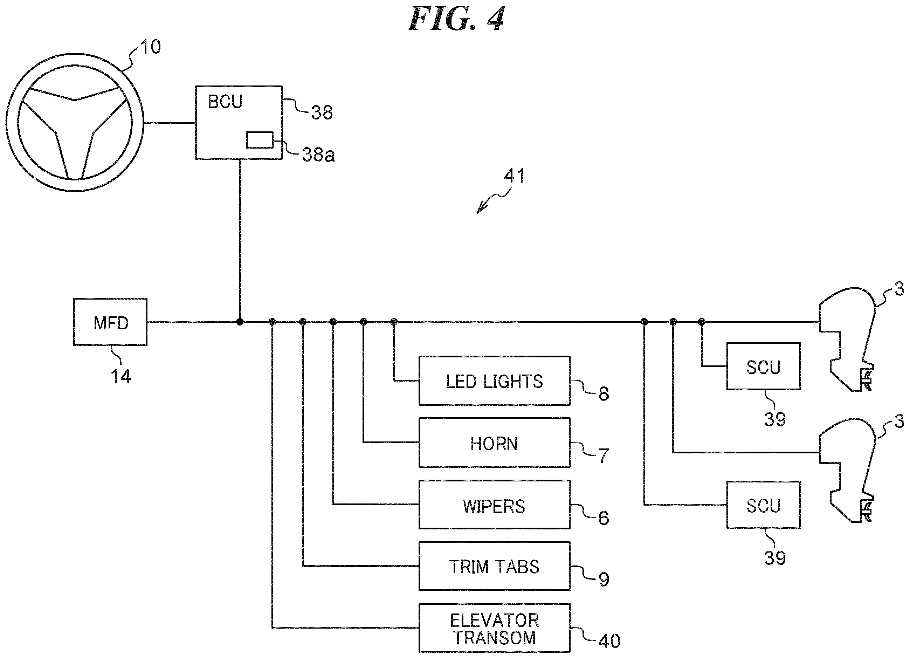

FIG. 1 is a perspective view of a marine vessel including a marine vessel steering mechanism according to a preferred embodiment. A marine vessel 1 includes a hull 2 and a plurality of (two in this case) outboard motors 3 functioning as marine vessel propulsion devices mounted on the hull 2. Each of the outboard motors 3 includes a power source, which is an engine or an internal combustion engine, and a propeller, and generates thrust by the propeller being rotated with driving force of the engine. Note that the number of outboard motors 3 included in the marine vessel 1 is not limited to two and may be one or three or more. Each of the outboard motors 3 may include an electric motor as the power source or may include both the engine and the electric motor as the power source. The outboard motors 3 are attached side by side to the stern of the hull 2 so as to be movable in the up-down direction (in other words, so as to be raised or lowered) relative to the hull 2 by an elevator transom 40 (see FIG. 4), which is an outboard motor elevator.

In the marine vessel 1, a vessel cockpit 4 is provided on the bow side or in the front of the hull 2. A windshield 5 is provided to cover the front of the vessel cockpit 4. The windshield 5 is provided with windshield wipers 6 for wiping off splashes or droplets on the windshield 5. A horn 7 that emits warning sound is provided on the bow side of the hull 2. LED lights 8 (lighting fixtures or lighting devices) each including, for example, an LED lamp, for lighting up the hull 2 are provided on the port side of the hull 2.

Two trim tabs 9 are provided on the stern of the hull 2. The trim tabs 9 are a posture control tabs for controlling the posture of the marine vessel 1 during sailing. For example, in a case where the marine vessel 1 is a planing boat, the trim tabs 9 turn around their stern sides (the front end) such that their rear ends descend during sailing, which generates lift on the hull 2. It lowers the bow side of the hull 2, thereby shifting the hull 2 from a hump mode to a planing mode. Note that the windshield wipers 6, the horn 7, the LED lights 8, the trim tabs 9, and the elevator transom 40 are also referred to as nautical equipment, because they are used while the marine vessel 1 is sailing.

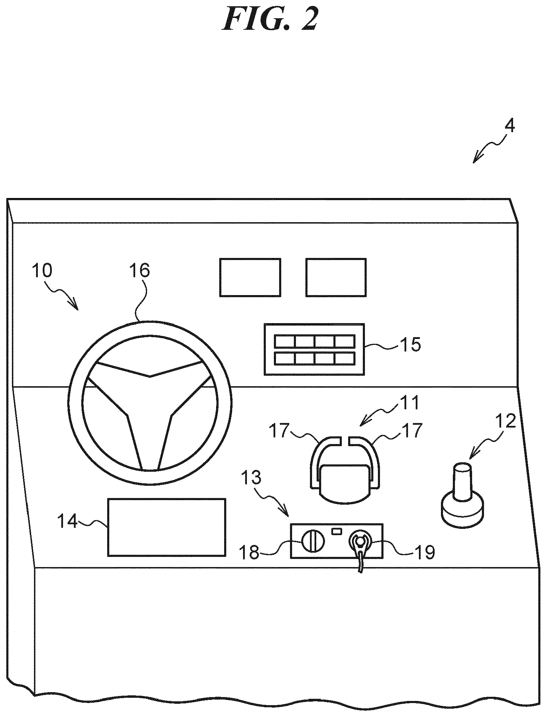

FIG. 2 is a perspective view of a main part of the vessel cockpit 4. In the vessel cockpit 4, there are a marine vessel steering mechanism 10, a remote control switch 11, a joystick 12, a main operation unit 13, an MFD (Multi Function Display) 14, and an automatic navigation panel 15.

The marine vessel steering mechanism 10 is a device that allows a vessel operator (a user) to set a course of the marine vessel 1 (that is, a device that adjusts a traveling direction of the hull 2). The marine vessel steering mechanism 10 includes a steering wheel 16 that is rotatable so that a vessel operator can turn the marine vessel 1 to the left or the right by rotating the steering wheel 16 to the left or the right. The remote control switch 11 includes levers 17 corresponding to the outboard motors 3. By operating one of the levers 17, a vessel operator can switch the direction of the thrust generated by one of the outboard motors 3 corresponding to the operated lever 17 to a forward direction or a backward direction and adjust output of the corresponding one of the outboard motors 3 to adjust vessel speed.

The joystick 12 is operable to be tilted forward, backward, leftward, and rightward and is operable to pivot around a pivot axis. The joystick 12 allows a vessel operator operating the joystick 12 to steer the marine vessel 1 with a course corresponding to the tilting direction of the joystick 12 and thrust corresponding to the tilting amount of the joystick 12. In a normal navigation mode, the outboard motors 3 operate mainly according to vessel operator's operation on the marine vessel steering mechanism 10 and vessel operator's operation on the remote control switch 11. On the other hand, in a joystick mode, the outboard motors 3 operate mainly according to the vessel operator's operation on the joystick 12. The normal navigation mode and the joystick mode is switched by an unillustrated changeover switch.

The main operation unit 13 includes a main switch 18 and an engine shut-off switch 19. One main switch 18 is provided in common to the outboard motors 3. The main switch 18 is an operator for collectively starting and collectively stopping the engines of the outboard motors 3. The engine shut-off switch 19 is a switch for emergency stop of the engines of the outboard motors 3.

The MFD 14 is, for example, a color LCD display. The MFD 14 functions as a display device that displays various kinds of information, has a touch panel function, and also functions as an input terminal that receives an input from a vessel operator. For example, the MFD 14 displays the rotating speeds of the engines of the outboard motors 3 and the vessel speed of the marine vessel 1 and further is capable of receiving an input for associating any of the switches 28 to 37 on the steering wheel 16 with operation of at least one piece of nautical equipment, which will be descried in details below.

The automatic navigation panel 15 is a panel on which a plurality of shift switches for shifting the marine vessel 1 to any one of a plurality of automatic navigation modes are placed. A vessel operator is allowed to shift the marine vessel 1 to a desired automatic navigation mode by operating a desired shift switch.

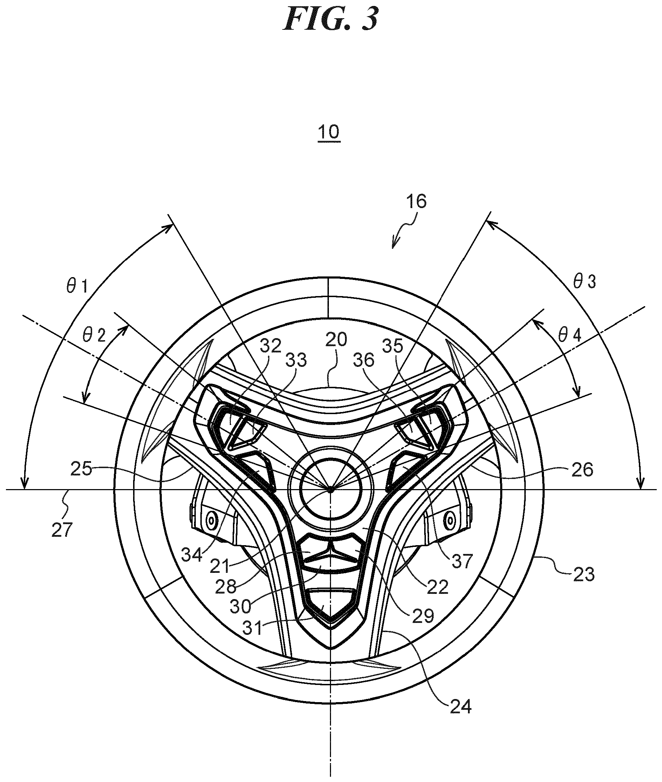

FIG. 3 is a diagram for explaining a configuration of the marine vessel steering mechanism 10. FIG. 3 illustrates the marine vessel steering mechanism 10 as viewed from a vessel operator directly facing the marine vessel steering mechanism 10 (as viewed from the front). Note that the up-down direction and the left-right direction in FIG. 3 correspond to the up-down direction and the left-right direction of the marine vessel 1, respectively. The front side in FIG. 3 corresponds to the stern side of the marine vessel 1, and the back side in FIG. 3 corresponds to the bow side of the marine vessel 1.

In FIG. 3, the marine vessel steering mechanism 10 includes the steering wheel 16 and a column portion 20 that rotatably supports the steering wheel 16. The steering wheel 16 includes a central portion 22 supported by the column portion 20 to be rotatable around its rotation center (a steering axis) 21 in relation to the hull 2, an annular wheel portion 23, and at least two (three in this case) spoke portions 24 to 26 connecting the central portion 22 and the annular wheel portion 23. The steering wheel 16 is provided on the stern-side end of the column portion 20.

When the steering wheel 16 is in a position that causes the marine vessel 1 to travel straight, the spoke portion 24 is located below a virtual plane 27 passing the rotation center 21 and parallel to the left-right direction and the spoke portion 24 extends from the rotation center 21 in the downward direction.

When the steering wheel 16 is in the position that causes the marine vessel 1 to travel straight, the spoke portion 25 is located above the virtual plane 27 and the spoke portion 25 extends from the rotation center 21 to form an angle being in a range not less than 0° and not greater than 60° (within the angle range indicated by θ1 in FIG. 3) with the virtual plane 27, preferably, an angle being in a range not less than 20° and not greater than 40° (within the angle range indicated by θ2 in FIG. 3) with the virtual plane 27, measured clockwise in the direction of a circumference centering on the rotation center 21.

When the steering wheel 16 is in the position that causes the marine vessel 1 to travel straight, the spoke portion 26 is located above the virtual plane 27 and the spoke portion 26 extends from the rotation center 21 to form an angle being in a range not less than 0° and not greater than 60° (within the angle range indicated by θ3 in FIG. 3) with the virtual plane 27, preferably, an angle being in a range not less than 20° and not greater than 40° (within the angle range indicated by θ4 in FIG. 3) with the virtual plane 27, measured counterclockwise in the direction of the circumference centering on the rotation center 21.

A plurality of switches 28 to 37 (operation switches) are located on the steering wheel 16. Specifically, the switches 28 to 31 are located on the spoke portion 24, the switches 32 to 34 are disposed on the spoke portion 25, and the switches 35 to 37 are disposed on the spoke portion 26. Each of the switches 28 to 37 can be composed, for example, of a push switch that receives an operational input given by a vessel operator pushing down the switch. In the present embodiment, any one of the switches 28 to 37 functions as an operation switch for operating at least one of the windshield wipers 6, the horn 7, the LED lights 8, the trim tabs 9, or the elevator transom 40. Note that the number of spoke portions is not limited to three and may be two or may be more than three. Preferably, at least one operation switch is located on any or each of at least two spoke portions.

FIG. 4 is a block diagram schematically explaining a configuration of a steering system for the marine vessel 1. In FIG. 4, the steering system for the marine vessel 1 includes a BCU (Boat Control Unit) 38, which is also referred to as a controller, SCUs (Steering Control Units) 39, the windshield wipers 6, the horn 7, the LED lights 8, the trim tabs 9, and the elevator transom 40 together with the outboard motors 3, the marine vessel steering mechanism 10, and the MFD 14 which were described above.

The BCU 38, which is a main controller of the steering system, controls the operations of components of the steering system according to various programs. For example, the BCU 38 controls the engines of the outboard motors 3 according to vessel operator's operation on the levers 17 of the remote control switch 11. The SCUs 39 are provided to the respective outboard motors 3 and control steering units that horizontally turn the respective outboard motors 3 in relation to the hull 2 of the marine vessel 1 to change the acting directions of the thrust of the outboard motors 3.

In the steering system illustrated in FIG. 4, the components of steering system are connected to one another by a CAN (Control Area Network) 41, which is a network in which a plurality of nodes are individually connected to a bus. In the CAN 41, an operational input to any of the plurality of switches 28 to 37 on the steering wheel 16 is converted into a digital signal and is transmitted to BCU 38 via the bus. The CAN 41 is constructed based on various standards. For example, in the marine vessel 1, the CAN 41 is constructed based on the standards of the NEMA 2000 (which is a trademark of the National Marine Electronics Association).

In the steering system illustrated in FIG. 4, a vessel operator is allowed to freely associate any of the plurality of switches 28 to 37 of the steering wheel 16 with the operation of at least one of the windshield wipers 6, the horn 7, the LED lights 8, the trim tabs 9, or the elevator transom 40. Specifically, a vessel operator selects one of the plurality of switches 28 to 37 on the MFD 14 and then selects at least one piece of nautical equipment that the vessel operator desires to operate with the selected switch. In response to the selection, the BCU 38 associates the switch and the at least one piece of nautical equipment selected by the vessel operator, and then stores information on the association in a memory (a storage unit) 38a in the BCU 38 itself. Accordingly, in response to an operational input of a vessel operator pushing down one of the switches 28 to 37, the BCU 38 refers to the information on the association stored in the memory 38a and operates or activates the at least one piece of nautical equipment associated with the switch.

For example, in a case where operation of the horn 7 has been associated with the switch 32, the horn 7 emits warning sound in response to a vessel operator pushing down the switch 32. In another case where operation of the windshield wipers 6 has been associated with the switch 33, the windshield wipers 6 are activated in response to a vessel operator pushing down the switch 33. In another case where operation of the LED lights 8 have been associated with the switch 35, the LED lights 8 are turned on in response to a vessel operator pushing down the switch 35.

A plurality of operation switches may be associated with multiple types of operation of a piece of nautical equipment. For example, the switch 36 and the switch 37 may be selected as switches for operating one of the trim tabs 9, so that a rise of the one of the trim tabs 9 can be associated with the switch 36, and a fall of the one of the trim tabs 9 can be associated with the switch 37. The switch 30 and the switch 31 may be selected as switches for operating the elevator transom 40, so that a movement in the upward direction of the outboard motors 3 in relation to the hull 2 can be associated with the switch 30, and a movement in the downward direction of the outboard motors 3 in relation to the hull 2 can be associated with the switch 31.

Further, the MFD 14 allows a vessel operator to set in detail the vessel operator' operation to be performed on a switch associated with operation of a piece of nautical equipment and the function of the piece of nautical equipment to be activated in response to the vessel operator' operation. For example, in a case where operation of the horn 7 is associated with the switch 32, a vessel operator is allowed to set the functions of the horn 7 to be activated, such that the horn 7 continuously emits warning sound in response to a vessel operator pressing and holding down (long-pressing) the switch 32 and, and the horn 7 intermittently emits warning sound in response to a vessel operator repeatedly pressing the switch 32. In a case where operation of one of the trim tabs 9 is associated with the switch 36 and the switch 37, a vessel operator is allowed to set the functions of the one of the trim tabs 9 to be activated as follows. In response to a vessel operator strongly pressing the switch 36, the one of the trim tabs 9 rises at once to the highest position. In response to a vessel operator weakly pressing the switch 36, the one of the trim tabs 9 continues to rise only while the switch 36 is pressed. In response to a vessel operator strongly pressing the switch 37, the one of the trim tabs 9 falls at once to the lowest position. In response to a vessel operator weakly pressing the switch 37, the one of the trim tabs 9 continues to fall only while the switch 37 is pressed.

Note that the above-described associations of the operations of nautical equipment with the respective switches were given just for explanation purpose. A vessel operator may freely decide operation of which piece of nautical equipment is associated with which switch. Since the windshield wipers 6, the horn 7, the LED lights 8, and the trim tabs 9 are examples of nautical equipment to be activated during the sail of the marine vessel 1, the operations thereof are preferably associated with respective switches (for example, the switches 32, 33, 35, and 36) located in a range that the thumb of a vessel operator holding the annular wheel portion 23 can reach. It eliminates a need for a vessel operator to take his/her hand off the annular wheel portion 23 during the sail of the marine vessel 1 in order to operate the nautical equipment and makes it easier to keep the course of the marine vessel 1. A vessel operator is allowed to perform the associations of the operations of nautical equipment with the respective switches at any time. For example, a vessel operator may perform the associations before departure, or may perform the associations during the sail.

Recent marine vessels are configured to support an automatic navigation mode and a fixed point holding mode. In the automatic navigation mode, a marine vessel automatically keeps its courses even if a vessel operator does not operate a steering wheel. In the fixed point holding mode, the movement of a marine vessel, which is not sailing, is automatically controlled such that the marine vessel continue to stay at one point (a predetermined position).

There are multiple variations of the automatic navigation mode and multiple variations of the fixed point holding mode, which are supported by the marine vessels. The variations of the automatic navigation mode include, for example, a "Course Hold" mode (a course holding mode) and a "Heading Hold" mode (a traveling direction maintaining mode). The variations of the fixed point holding mode include, for example, a FishPoint mode (a position maintaining mode), a DriftPoint mode (a bow direction maintaining mode), and the StayPoint mode (a position and bow direction maintaining mode), where FishPoint, DriftPoint and StayPoint are trademarks of Yamaha Motor Co., Ltd.

The "Course Hold" mode is a mode in which thrusts of outboard motors and acting directions of the thrusts are controlled such that a marine vessel follows a set course even if the marine vessel is subjected to a disturbance such as wind or water current while the marine vessel is sailing. The "Heading Hold" mode is a mode in which thrusts of outboard motors and acting directions of the thrusts are controlled such that the direction of the bow is maintained in a set direction (a predetermined direction) even if the marine vessel is subjected to the disturbance while the marine vessel is sailing. The FishPoint mode is a mode in which thrusts of outboard motors and acting directions of the thrusts are controlled to keep a marine vessel at one point (a predetermined position) even if the marine vessel is subjected to the disturbance while the marine vessel is not sailing. The DriftPoint mode is a mode in which thrusts of outboard motors and acting directions of the thrusts are controlled such that the direction of the bow of a marine vessel is maintained in a set direction (a predetermined direction) even if the marine vessel is subjected to the disturbance while the marine vessel is not sailing. The StayPoint mode is a mode in which thrusts of outboard motors and acting directions of the thrusts are controlled such that the direction of the bow of a marine vessel is maintained in a set direction and the marine vessel is kept at one point even if the marine vessel is subjected to the disturbance while the marine vessel is not sailing. Note that the modes are realized in the marine vessel 1 by the BCU 38 controlling the outboard motors 3 and the SCUs 39 according to a predetermined program.

In the present embodiment, mode shift functions that shifts the marine vessel 1 to the respective modes are associated with the switches 28 to 37 of the steering wheel 16. For example, a mode shift function to the DriftPoint mode is associated with the switch 28, a mode shift function to the StayPoint mode is associated with the switch 29, a mode shift function to the FishPoint mode is associated with the switch 30, a mode shift function to the "Heading Hold" mode is associated with the switch 33, and a mode shift function to the "Course Hold mode" is associated with the switch 36.

Incidentally, as explained above, since a vessel operator is allowed to freely decide operation of which piece of nautical equipment is associated with which switch, a vessel operator may associate operation of a piece of nautical equipment with a switch with which a mode shift function has been associated. In this case, whether to execute the associated mode shift function or perform operation of the associated piece of nautical equipment in response to vessel operator's operation on the switch, is switched according to, for example, an operational input to the changeover switch. As the changeover switch, a switch not associated with a mode shift function or operation of at least one of nautical equipment should be selected among the switches 28 to 37. For example, the switch 31 can be used as the changeover switch. Note that it is preferable that the MFD 14 displays whether the associated mode shift function is executed or the operation of the associated piece of nautical equipment is performed.

According to the present embodiment, operations of at least one piece of nautical equipment are associated with the switches 28 to 37 provided together with the steering wheel 16 of the marine vessel steering mechanism 10. Consequently, it is possible to eliminate a need to locate switches for operating the nautical equipment on the console panel of the vessel cockpit 4. It is possible to locate other switches on the console panel of the vessel cockpit 4. Consequently, flexibility of a layout of the other switches can be improved. In the present embodiment, a vessel operator is allowed to freely decide which operation of which piece of nautical equipment is associated with which switch, which makes it possible to select or change a switch for the association in view of a frequency of use of the nautical equipment. Therefore, when operation of a piece of nautical equipment having a high frequency of use is associated with a switch located in a range that the thumb of the vessel operator holding the annular wheel portion 23 easily reaches, it improves convenience of the nautical equipment for the vessel operator.

Further, in the present embodiment, operations of pieces of nautical equipment are associated with the switches 28 to 37 provided together with the steering wheel 16, which allows a vessel operator to easily operate the pieces of nautical equipment without taking off the hand from the steering wheel 16. Consequently, the vessel operator does not need to extend the hand to the switches located on the console panel of the vessel cockpit 4 in order to operate the nautical equipment. It results in improved operability of switches for operating the nautical equipment.

Furthermore, according to the present embodiment, the steering system illustrated in FIG. 4 is easily constructed in the marine vessel 1 just by installing the steering wheel 16 equipped with the switches 28 to 37 onto the marine vessel 1 without placing switches for operating the nautical equipment on the console panel of the vessel cockpit 4. It easily achieves the control of operation of the nautical equipment with the switches.

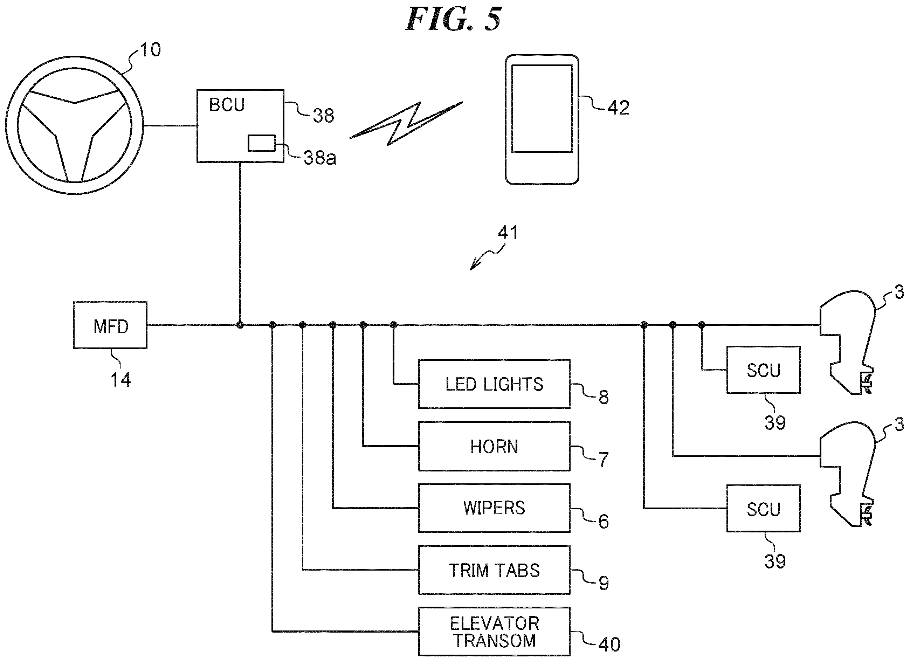

As described above, in the present embodiment, a vessel operator associates operation of at least one piece of nautical equipment with a desired switch via the MFD 14. However, for example, as illustrated in FIG. 5, the steering system for the marine vessel 1 may be configured to be communicable with an external mobile device, for example, a smartphone 42 (an input terminal) by near field communication (for example, Wi-Fi or Bluetooth) so that a vessel operator can associate operation of at least one of nautical equipment with a desired switches via the smartphone 42.

Note that, in the present embodiment, the marine vessel steering mechanism 10 is used for the marine vessel 1 equipped with two outboard motors 3. However, the marine vessel steering mechanism 10 may be used for any type of marine vessel. For example, the marine vessel steering mechanism 10 may be applied to a marine vessel equipped with an inboard/outboard motor or an inboard motor.

## Claims

1. A steering mechanism (10) for a marine vessel (1) equipped with a plurality of pieces of nautical equipment (6, 7, 8, 9, 40), the steering mechanism (10) comprising:
a steering wheel (16) with a plurality of operation switches (28 to 37) configured for operating the pieces of nautical equipment (6, 7, 8, 9, 40), and an input terminal (14, 42) that receives an input from a user,
wherein the operation switches (28 to 37) are each configured to be associated with one of the pieces of nautical equipment (6, 7, 8, 9, 40), **characterized in that**
the input terminal (14, 42) is configured to display, for user selection, the operation switches (28 to 37) and the pieces of nautical equipment (6, 7, 8, 9, 40), and to receive a selection of one of the operation switches and one of the pieces of nautical equipment to associate the selected operation switch with the selected piece of nautical equipment.

2. A steering system for a marine vessel (1), comprising:
at least one piece of nautical equipment (6, 7, 8, 9, 40);
a steering mechanism according to claim 1 that is configured to adjust a traveling direction of a hull (2) of the marine vessel (1),
wherein the input terminal (14, 42) is configured to allow the user to associate the at least one piece of nautical equipment (6, 7, 8, 9, 40) with the operation switch (28 to 37).

3. The steering system for a marine vessel (1) according to claim 2, wherein the at least one piece of nautical equipment (6, 7, 8, 9, 40) and the operation switch (28 to 37) are connected by a Control Area Network (41).

4. The steering system for a marine vessel (1) according to claim 2 or 3, wherein the input terminal is a display device (14) or a mobile device (42).

5. The steering system for a marine vessel (1) according to at least one of the claims 2 to 4, further comprising a controller configured to associate the at least one piece of nautical equipment (6, 7, 8, 9, 40) with the operation switch (28 to 37) according to an input received from the user via the input terminal (14, 42).

6. The steering system for a marine vessel (1) according to at least one of the claims 2 to 5, further comprising a storage unit (38a) configured to store information on association of the at least one piece of nautical equipment (6, 7, 8, 9, 40) and the operation switch (28 to 37).

7. The steering system for a marine vessel (1) according to at least one of the claims 2 to 6, wherein the operation switch (28 to 37) is configured to be associated with a mode shift function that shifts the marine vessel (1) to one of a position maintaining mode in which the marine vessel (1) is kept in a predetermined position, a bow direction maintaining mode in which a direction of a bow of the marine vessel (1) is maintained in a predetermined direction, and a position and bow direction maintaining mode in which the marine vessel (1) is kept in the predetermined position and the direction of the bow of the marine vessel (1) is maintained in the predetermined direction, and
the steering wheel (16) is further equipped with a changeover switch (31) configured for switching whether to activate the at least one piece of nautical equipment (6, 7, 8, 9, 40) according to user's operation on the operation switch (28 to 37) or execute the mode shift function according to the user's operation on the operation switch (28 to 37).

8. The steering system for a marine vessel (1) according to at least one of the claims 2 to 7, wherein the steering wheel (16) comprises a central portion (22) supported to be rotatable around a rotation center (21) thereof in relation to the hull (2), an annular wheel portion (23), and at least two spoke portions (24, 25, 26) connecting the central portion (22) and the wheel portion (23), and
the operation switch (28 to 37) is located on the at least two spoke portions (24, 25, 26).

9. The steering system for a marine vessel (1) according to claim 8, wherein the at least two spoke portions (24, 25, 26) are located at one side of a virtual plane (27) passing the rotation center (21) and are located to form respective angles with the virtual plane (27), each of the respective angles being in a range (θ1, θ3) not less than 0° and not greater than 60°, measured in a direction of a circumference centering on the rotation center (21), and
the operation switch (28 to 37) located on the at least two spoke portions (24, 25, 26) is associated with at least one piece of nautical equipment (6, 7, 8, 9, 40) to be activated during a sail of the marine vessel (1).

10. A marine vessel (1) comprising:
a hull (2); and
the steering system according to at least one of the claims 2 to 9.

11. The marine vessel (1) according to claim 10, provided with the steering system according to claim 9, wherein the at least two spoke portions (24, 25, 26) are located above the virtual plane (27) passing the rotation center (21) and parallel to a left-right direction of the marine vessel (1).

12. The marine vessel (1) according to claim 10 or 11, wherein the at least one piece of nautical equipment includes at least one of a horn (7), a windshield wiper (6), a lighting fixture (8), a posture control tab (9), or an outboard motor elevator (40).

## Patentansprüche

1. Ein Lenkmechanismus (10) für ein Wasserfahrzeug (1), das mit einer Mehrzahl von nautischen Ausrüstungsgegenständen (6, 7, 8, 9, 40) ausgestattet ist, wobei der Lenkmechanismus (10) umfasst:
ein Steuerrad (16) mit einer Mehrzahl von Bedienschaltern (28 bis 37), die konfiguriert sind, um die nautischen Ausrüstungsgegenstände (6, 7, 8, 9, 40) zu bedienen, und einen Eingangsanschluss (14, 42), der eine Eingabe von einem Benutzer empfängt,
wobei die Bedienschalter (28 bis 37) jeweils so konfiguriert sind, um einem der nautischen Ausrüstungsgegenstände (6, 7, 8, 9, 40) zugeordnet zu sein, **dadurch gekennzeichnet, dass**
der Eingangsanschluss (14, 42) so konfiguriert ist, dass er zur Auswahl durch den Benutzer, die Bedienschalter (28 bis 37) und die nautischen Ausrüstungsgegenstände (6, 7, 8, 9, 40), und zum Empfangen einer Auswahl eines der Bedienschalter und eines der nautischen Ausrüstungsgegenstände, um den ausgewählten Bedienschalter dem ausgewählten nautischen Ausrüstungsgegenstand zuzuordnen, anzeigt.

2. Ein Lenkungssystem für ein Wasserfahrzeug (1), das umfasst:
zumindest ein Stück nautischer Ausrüstung (6, 7, 8, 9, 40);
einen Lenkmechanismus gemäß Anspruch 1, der so ausgelegt ist, dass er eine Fahrtrichtung eines Rumpfes (2) des Wasserfahrzeugs (1) einstellt,
wobei der Eingangsanschluss (14, 42) so konfiguriert ist, um es dem Benutzer zu ermöglichen, das zumindest eine Stück nautische Ausrüstung (6, 7, 8, 9, 40) dem Bedienschalter (28 bis 37) zuzuordnen.

3. Das Lenkungssystem für ein Wasserfahrzeug (1) gemäß Anspruch 2, wobei das zumindest eine Stück nautischer Ausrüstung (6, 7, 8, 9, 40) und die Bedienschalter (28 bis 37) über ein Control Area Network (41) miteinander verbunden sind.

4. Das Lenkungssystem für ein Wasserfahrzeug (1) gemäß Anspruch 2 oder 3, wobei der Eingangsanschluss eine Anzeigevorrichtung (14) oder ein mobiles Gerät (42) ist.

5. Das Lenkungssystem für ein Wasserfahrzeug (1) gemäß zumindest einem der Ansprüche 2 bis 4, das ferner eine Steuerung umfasst, die so konfiguriert ist, um das zumindest ein Stück nautische Ausrüstung (6, 7, 8, 9, 40) dem Bedienschalter (28 bis 37) entsprechend einer vom Benutzer über den Eingabeterminal (14, 42) empfangenen Eingabe zuzuordnen.

6. Das Lenkungssystem für ein Wasserfahrzeug (1) gemäß zumindest einem der Ansprüche 2 bis 5, das ferner eine Speichereinheit (38a) umfasst, die so konfiguriert ist, um Informationen über die Zuordnung des zumindest eines Stücks nautischer Ausrüstung (6, 7, 8, 9, 40) und des Bedienungsschalters (28 bis 37) zu speichern.

7. Das Lenkungssystem für ein Wasserfahrzeug (1) gemäß zumindest einem der Ansprüche 2 bis 6, wobei der Bedienschalter (28 bis 37) so konfiguriert ist, um einer Moduswechsel-Funktion zugeordnet zu sein, die das Wasserfahrzeug (1) in einen der folgenden Modi versetzt: einen Positionshaltemodus, in dem das Wasserfahrzeug (1) in einer vorbestimmten Position gehalten wird, einen Bugrichtungs-Halte-Modus, in dem die Richtung des Bugs des Wasserfahrzeugs (1) in einer vorgegebenen Richtung gehalten wird, und einen Positions- und Bugrichtungs-Halte-Modus, in dem das Wasserfahrzeug (1) in der vorgegebenen Position gehalten wird und die Richtung des Bugs des Wasserfahrzeugs (1) in der vorgegebenen Richtung gehalten wird, und das Steuerrad (16) ferner mit einem Umschalter (31) ausgestattet ist, der konfiguriert ist, um je nach Betätigung des Bedienschalters (28 bis 37) durch den Benutzer entweder die Aktivierung des zumindest einen Stückes nautischer Ausrüstung (6, 7, 8, 9, 40) zu veranlassen oder die Moduswechsel-Funktion auszuführen.

8. Das Lenkungssystem für ein Wasserfahrzeug (1) gemäß zumindest einem der Ansprüche 2 bis 7, wobei das Lenkrad (16) einen Zentralabschnitt (22), der so gelagert ist, dass er sich relativ zum Rumpf (2) um seinen Drehpunkt (21) drehen kann, einen ringförmigen Radabschnitt (23) und zumindest zwei Speichenabschnitte (24, 25, 26), die den Zentralabschnitt (22) und den Radabschnitt (23) verbinden, umfasst, und
der Betätigungsschalter (28 bis 37) sich an den zumindest zwei Speichenabschnitten (24, 25, 26) befindet.

9. Das Steuerungssystem für ein Wasserfahrzeug (1) gemäß Anspruch 8, wobei sich die zumindest zwei Speichenabschnitte (24, 25, 26) auf einer Seite einer virtuellen Ebene (27) angeordnet sind, die durch den Drehpunkt (21) verläuft, und so angeordnet sind, dass sie jeweilige Winkel mit der virtuellen Ebene (27) bilden, wobei jeder der jeweiligen Winkel in einem Bereich (θ1, θ3) von nicht weniger als 0° und nicht mehr als 60° liegt, gemessen in einer Richtung eines Kreises, dessen Mittelpunkt der Drehpunkt (21) ist, und
die an den zumindest zwei Speichenabschnitten (24, 25, 26) angeordneten Bedienungsschalter (28 bis 37) jeweils mit zumindest einem Stück nautischer Ausrüstung (6, 7, 8, 9, 40) verbunden sind, das während einer Fahrt des Wasserfahrzeugs (1) aktiviert werden soll.

10. Ein Wasserfahrzeug (1), das umfasst:
einen Rumpf (2); und
das Lenksystem gemäß zumindest einem der Ansprüche 2 bis 9.

11. Das Wasserfahrzeug (1) gemäß Anspruch 10, das mit dem Lenksystem gemäß Anspruch 9 ausgerüstet ist, wobei die zumindest zwei Speichenabschnitte (24, 25, 26) oberhalb der virtuellen Ebene (27) angeordnet sind, die durch den Drehpunkt (21) verläuft und parallel zu einer Links-Rechts-Richtung des Wasserfahrzeugs (1) ist.

12. Das Wasserfahrzeug (1) gemäß Anspruch 10 oder 11, wobei das zumindest eine Stück nautischer Ausrüstung zumindest eines der folgenden Elemente enthält: eine Hupe (7), einen Scheibenwischer (6), eine Beleuchtungsvorrichtung (8), eine Trimmklappe (9) oder einen Außenbordmotor-Hebemechanismus (40).

## Revendications

1. Mécanisme de direction (10) pour un navire (1) équipé d'une pluralité d'équipements
nautiques (6, 7, 8, 9, 40), le mécanisme de direction (10) comprenant :
un volant (16) pourvu d'une pluralité d'interrupteurs de commande (28 à 37) configurés pour actionner les équipements nautiques (6, 7, 8, 9, 40), et un terminal d'entrée (14, 42) qui reçoit une entrée provenant d'un utilisateur,
dans lequel les interrupteurs de commande (28 à 37) sont chacun configurés pour être associés à l'un des équipements nautiques (6, 7, 8, 9, 40), **caractérisé en ce que**
le terminal d'entrée (14, 42) est configuré pour afficher, en vue d'une sélection par l'utilisateur, les interrupteurs de commande (28 à 37) et les équipements nautiques (6, 7, 8, 9, 40), et pour recevoir une sélection de l'un des interrupteurs de commande et de l'un des équipements nautiques afin d'associer l'interrupteur de commande sélectionné à l'équipement nautique sélectionné.

2. Système de direction pour un navire (1), comprenant :
au moins un équipement nautique (6, 7, 8, 9, 40) ;
un mécanisme de direction selon la revendication 1 qui est configuré pour ajuster une direction de déplacement d'une coque (2) du navire (1),
dans lequel le terminal d'entrée (14, 42) est configuré pour permettre à l'utilisateur d'associer ledit au moins un équipement nautique (6, 7, 8, 9, 40) à l'interrupteur de commande (28 à 37).

3. Système de direction pour un navire (1) selon la revendication 2, dans lequel ledit au moins un équipement nautique (6, 7, 8, 9, 40) et l'interrupteur de commande (28 à 37) sont connectés par un réseau Control Area Network (41).

4. Système de direction pour un navire (1) selon la revendication 2 ou 3, dans lequel le terminal d'entrée est un dispositif d'affichage (14) ou un dispositif mobile (42).

5. Système de direction pour un navire (1) selon au moins l'une des revendications 2 à 4, comprenant en outre un contrôleur configuré pour associer ledit au moins un équipement nautique (6, 7, 8, 9, 40) à l'interrupteur de commande (28 à 37) selon une entrée reçue de l'utilisateur via le terminal d'entrée (14, 42).

6. Système de direction pour un navire (1) selon au moins l'une des revendications 2 à 5, comprenant en outre une unité de stockage (38a) configurée pour stocker des informations d'association dudit au moins un équipement nautique (6, 7, 8, 9, 40) et de l'interrupteur de commande (28 à 37).

7. Système de direction pour un navire (1) selon au moins l'une des revendications 2 à 6, dans lequel l'interrupteur de commande (28 à 37) est configuré pour être associé à une fonction de changement de mode qui fait passer le navire (1) à l'un parmi un mode de maintien de position dans lequel le navire (1) est maintenu dans une position prédéterminée, un mode de maintien de la direction de la proue dans lequel une direction d'une proue du navire (1) est maintenue dans une direction prédéterminée, et un mode de maintien de position et de direction de la proue dans lequel le navire (1) est maintenu dans la position prédéterminée et la direction de la proue du navire (1) est maintenue dans la direction prédéterminée, et
le volant (16) est en outre équipé d'un commutateur de basculement (31) configuré pour commuter s'il faut activer ledit au moins un équipement nautique (6, 7, 8, 9, 40) selon une action de l'utilisateur sur l'interrupteur de commande (28 à 37) ou exécuter la fonction de changement de mode selon l'action de l'utilisateur sur l'interrupteur de commande (28 à 37).

8. Système de direction pour un navire (1) selon au moins l'une des revendications 2 à 7, dans lequel le volant (16) comprend une partie centrale (22) supportée de manière à pouvoir tourner autour d'un centre de rotation (21) de celle-ci par rapport à la coque (2), une partie de jante annulaire (23), et au moins deux parties de rayons (24, 25, 26) reliant la partie centrale (22) et la partie de jante (23), et
l'interrupteur de commande (28 à 37) est situé sur lesdites au moins deux parties de rayons (24, 25, 26).

9. Système de direction pour un navire (1) selon la revendication 8, dans lequel lesdites au moins deux parties de rayons (24, 25, 26) sont situées d'un côté d'un plan virtuel (27) passant par le centre de rotation (21) et sont situées de manière à former des angles respectifs avec le plan virtuel (27), chacun des angles respectifs étant dans une plage (8Ø, 8Ø) non inférieure à 0° et non supérieure à 60°, mesurée dans une direction circonférentielle centrée sur le centre de rotation (21), et l'interrupteur de commande (28 à 37) situé sur lesdites au moins deux parties de rayons (24, 25, 26) est associé à au moins un équipement nautique (6, 7, 8, 9, 40) à activer pendant une navigation du navire (1).

10. Navire (1) comprenant :
une coque (2) ; et
le système de direction selon au moins l'une des revendications 2 à 9.

11. Navire (1) selon la revendication 10, pourvu du système de direction
selon la revendication 9, dans lequel lesdites au moins deux parties de rayons (24, 25, 26) sont situées au-dessus du plan virtuel (27) passant par le centre de rotation (21) et parallèle à une direction gauche-droite du navire (1).

12. Navire (1) selon la revendication 10 ou 11, dans lequel ledit au moins un équipement nautique comprend au moins l'un parmi un avertisseur (7), un essuie-glace (6), un dispositif d'éclairage (8), un volet de commande d'assiette (9), ou un élévateur de moteur hors-bord (40).
